# EUROPEAN PATENT SPECIFICATION

(11) **EP 0 442 525 B1**
(45) Date of publication and mention of the grant of the patent: **02.05.1997**
(21) Application number: 91102188.9
(22) Date of filing: 15.02.1991
(51) Int. Cl.: G11B 15/665

(54) **Magnetic recording and reproducing apparatus**
Magnetisches Aufzeichnungs- und Wiedergabegerät
Appareil d'enregistrement et de reproduction magnétique

(30) Priority: 16.02.1990 JP 33778/90
(43) Date of publication of application: 21.08.1991
(73) Proprietor: HITACHI, LTD., Chiyoda-ku, Tokyo 100 (JP); HITACHI VIDEO ENGINEERING, INC., Yokohama-shi Kanagawa (JP)
(72) Inventor: Takeda, Hidekazu, Fujisawa-shi, Kanagawa (JP); Iwakura, Masao, Fujisawa-shi, Kanagawa (JP); Masuoka, Nobuo, Chigasaki-shi, Kanagawa (JP); Itou, Tetsuo, Rm. A201 Hitachi Shimokurataryo, Yokohama-shi, Kanagawa (JP); Nishida, Ikuo, Katsuta-shi, Ibaraki (JP); Yamashita, Yoshiharu, Katsuta-shi, Ibaraki (JP); Ohmori, Motonori, Katsuta-shi, Ibaraki (JP); Iyota, Koji, Katsuta-shi, Ibaraki (JP)
(74) Representative: Altenburg, Udo, Dipl.-Phys.

(56) References cited:
- EP-A- 0 227 917
- EP-A- 0 291 340
- EP-A- 0 329 180
- WO-A-84/03790
- PATENT ABSTRACTS OF JAPAN vol. 10, no. 160 (P-465)(2216) 7 June 1986& JP-A-61 13 466 (TOSHIBA) 21 January 1986

## Description

### BACKGROUND OF THE INVENTION

The present invention relates to a magnetic recording and reproducing apparatus of helical scan type and, particularly, to a magnetic tape guiding and tape loading mechanism of such apparatus, which is suitable to reduce the size of magnetic recording and reproducing apparatus in area and thickness.

For helical scan type magnetic recording and reproducing apparatus (referred to as VTR hereinafter), its compactness in area and thickness is highly desired in view of portability thereof when applied to a VTR combined with a video camera such as the so-called "8 mm video camera". In a VTR, a tape drive mechanism may occupy a large space thereof and therefore a reduction of such space may contribute to a compactness of VTR.

In order to minimize the size of tape drive mechanism, it is proposed in Japanese Kokai (P) 63-239646 to reduce the thickness of tape drive mechanism by arranging a head cylinder device such that a portion of a cylinder drum of the head cylinder device is received in a space provided in a front portion of a tape cassette and covered by an internal flap for tape protection according to the industrial standard, the flap being opened when the tape cassette is inserted. For a tape loading, the so-called M loading system in which a portion of a magnetic tape are derived from a tape cassette in parallel between a point on a supply reel side and a point on a winding reel side of the tape cassette and helically wound on the cylinder drum over a predetermined angle and which is usually used in a VHS type VTR is used to make the thickness of the tape mechanism as small as possible.

In such case, a level of a center of tape in width direction on height regulation guide rollers provided in a tape deriving area and in a tape returning area in the vicinity of the cylinder drum for deriving the tape in parallel from the space of the cassette is equal to a level of a center of the tape within the cassette at a time when the loading completes.

In such conventional technique, a pair of slanted posts for helically winding the tape on the cylinder drum must be positioned in the vicinity of the tape deriving and returning areas, respectively. Therefore, an inclination angle and orientation of the cylinder drum with respect to a reference plane of the apparatus and a the height of rotation center of the magnetic head mounted on the cylinder drum with respect to a reference plane including a center line of the magnetic tape within the tape cassette are restricted.

In detail, assuming a coordinate system having an original point corresponding to a rotation center of the magnetic head, an x axis extending in parallel to a straight line passing through the original piont and connecting centers of the supply and winding reels in the tape cassette and a y axis passing through the original point and orthogonal to the x axis, the orientation of the cylinder drum is substantially within a third quadrature of this coordinate system (i.e., the cylinder drum is slanted toward the supply reel) and the inclination angle thereof is about 11 to 12 degrees. Further, the level of rotation center of the magnetic head is lower than the level of center line of the magnetic tape within the cassette by several millimeters.

With such head-cylinder arrangement, the amount of the cylinder drum to be received in the open space of the tape cassette is very limited.

Further, since the inclination angle of the cylinder drum exceeds 10 degrees, the thickness of this mechanism which depends upon the position of lower edge of the cylinder drum is increased.

That is, there is a limitation in gap between the inserted tape cassette and the cylinder drum and there is a limitation in size of the space to be occupied by the cylinder drum, preventing the tape drive mechanism from being minimized. In order to solve this problem and to allow the size of the tape drive mechanism to be made as small as possible, Japanese Patent Application No. 288912/1989 proposes to arrange a cylinder drum in a reference plane orthogonal to a straight line connecting rotation centers of supply and take-up reels within a cassette and inclined toward the cassette with a predetermined angle (6 to 8 degrees) from a straight line orthogonal to a plane on which the cassette is mounted and to make a winding angle of magnetic tape on the cylinder drum symmetrical with respect to the reference plane.

From EP-A-0 291 340 a magnetic recording and reproducing apparatus as defined in the preamble of claim 1 is known. With respect to other apparatuses of this general type, it is referred to EP-A-0 227 917 and EP-A-0 329 180.

### SUMMARY OF THE INVENTION

An object of the present invention is to provide a tape running guide and tape loading mechanism allowing the above mentioned cylinder drum arrangement and allowing the mechanism to be more compact and thinner.

This object is achieved according to the present invention by an apparatus as defined in claim 1. Advantageous embodiments of this apparatus are mentioned in dependent claims 2 to 6.

According to the present invention, a three-dimensional loading system is employed in which a level of tape fed to a cylinder drum is made high and that of the tape leaving the cylinder drum is made low. A tape guide system includes, in the tape feeding side, at least a first, movable slanted pin and a first, movable tape height regulation guide roller for deriving the tape from an open space of a magnetic tape cassette and winding the tape on the cylinder drum, a second slanted pin and a second tape height regulation guide roller and a third, movable guide pin for winding the tape on the second slanted pin are provided and, in the tape returning side, a fourth, movable slanted pin and a fourth, movable tape height regulation guide roller for deriving the magnetic tape from the open space of the tape cassette and winding the magnetic tape on the cylinder drum, a fifth, movable slanted pin and a pinch roller which are to be derived from the open space of the tape cassette and a capstan arranged outside the open space.

These movable tape guide members are movable on a common area in time-shared manner to thereby make the loading mechanism compact.

With the cylinder drum arrangement, an upper surface of the rotary cylinder becomes in parallel to an opened internal flap of the tape cassette in a direction parallel to a straight line connecting centers of the supply reel and a take-up reel of the magnetic tape cassette. Therefore, when the rotary cylinder is partially received in the open space of the tape cassette with minimum necessary clearance, the rotary cylinder can be arranged such that a rotation center of the magnetic head thereon becomes highest compared with that of any other inclination of the cylinder. Thus, it is possible to reduce the thickness of a space to be occupied by the rotary cylinder within the mechanism.

In the tape running system of the present invention, it is important to acquire a tape span in each of the tape supply side and the tape take-up side of the drum, which must be long enough to smoothly shift a level of the tape, while restricting a frictional loss due to slide contact between the running tape and the tape guide members. In the present invention, the tape winding angle on the drum in the tape supply side is maintained as small as possible by the slanted pin in the vicinity of the drum and a vector of the tape in its running direction is directed to the cassette side while maintaining the tape winding angle on the slanted pin by the tape height regulation guide roller movable together with the slanted pin to thereby correct vertical deviation of the tape center within a limited area.

That is, the tape span in the tape supply side of the drum is given by the second height regulation guide roller which contacts with the magnetic surface of the tape and, by turning the vector of the tape in the running direction to opposite, the deviation of tape attitude (twisting) is corrected by the second slanted pin.

The second slanted pin and the second tape height regulation guide roller are mounted on an arm rotatably supported by a pin on the main chasis and retracted during the slanted pin and the height regulation guide roller provided in the tape supply side are derived from the open space of the tape cassette and pass through around the cylinder drum.

After these members passed through the area, these second slanted pin and the second guide roller are put in the tape running path to form a final tape running system. Further, while the tape winding angle on the second slanted pin is maintained by the third guide pin, the tape running direction vector is changed through the tension pin to the tape exit of the cassette.

The third guide pin serves to derive the tape from the cassette open space in the initial stage of the loading and to regulate the tape running height in a position closer to the cylinder.

In the tape return area, the tape winding angle on the drum is maintained by the slanted pin arranged in the vicinity of the cylinder and the tape running direction vector is changed toward the capstan. Further, the tape span necessary for correction of height deviation of the tape in the return area is maintained by the second slanted pin and the tape attitude is also corrected thereby.

The second slanted pin is derived from the open space of the tape cassette and contacts with the base surface of the tape. Therefore, it is possible to restrict the increase of tension. Further, since it is possible to give a downward vector to the tape due to the fact that the tape is derived in the initial stage of loading, it is possible to prevent the lower edge of the lowering tape from being physically damaged by the flange portion of the tape height regulation guide roller.

### BRIEF DESCRIPTION OF THE DRAWINGS

Fig. 1 is a plan view of an embodiment of a magnetic recording and reproducing apparatus according to the present invention;
Fig. 2 is a cross section taken along a line X-X in Fig. 1;
Fig. 3 shows an example of a winding range of magnetic tape on a rotary cylinder shown in Fig. 1;
Fig. 4 is a rear view of the embodiment when looked in an arrow D in Fig. 1;
Fig. 5 is a plan view of the mechanism in an unloading state;
Figs. 6 and 7 are plan views of the mechanism in different states in loading condition, respectively;
Fig. 8 is a plan view at a completion of loading;
Fig. 9 is a cross section of a guide roller 7;
Fig. 10 is a plan view of the loading mechanism on a main chasis in an unloading state;
Fig. 11 is an enlarged plan view showing an arm 23 and a cam arm 60 of the mechanism in unloading condition; and
Fig. 12 is a similar view to Fig. 11, at a loading completion.

### DETAILED DESCRIPTION OF THE PREFERRED EMBODIMENT

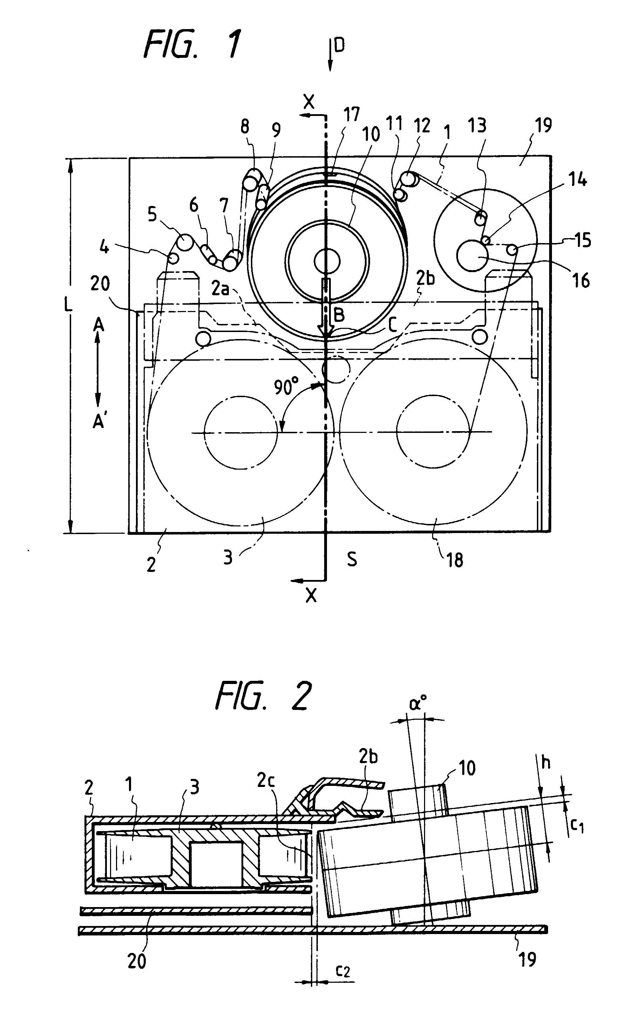

Fig. 1 is a plan view of an embodiment of a magnetic recording and reproducing apparatus according to the present invention. In Fig. 1, the apparatus includes a main chasis 19 and a movable chasis 20. A tape cassette 2 including a supply reel 3 for supplying a magnetic tape 1 and a winding reel 18 for winding the tape is inserted into substantially horizontally and then downwardly onto the movable chasis 20 which is movable in directions A, A' by predetermined distance. The cassette 2 has an open space 2a usually covered by an internal flap 2b.

On the main chasis 19, a rotary cylinder 10 of a cylinder drum is mounted and, in a tape supply side thereof, a tension pin 4, a guide roller 5, a slanted pin 6, guide rollers 7 and 8 and a slanted pin 9 are arranged. In a tape take-up side of the rotary cylinder 10, a slanted pin 11, a guide roller 12, a slanted pin 13, a capstan 14, a guide pin 15 and a pinch roller 16 are arranged along a tape path, as shown. At least a magnetic head 17 is arranged on a cylinder drum supported by the rotary cylinder 10.

It should be noted that, in this embodiment, the cylinder drum and the tape cassette 2 are arranged in a common area to reduce the thickness of the mechanism when the cassette is completely loaded.

In Fig. 1, the cylinder drum is fixed through a cylinder support member (not shown) to the main chasis 19. When there is no tape cassette 2 mounted, the movable chasis 20 takes a limit positionremotest from the rotary cylinder 10 in the direction A'.

When the tape cassette 2 is inserted through a cassette insertion hole (not shown), the cassette 2 is fixedly mounted on the movable chasis 20 and the internal flap 2b thereof is opened to expose the open space 2a of the cassette 2. Then the movable chassis 20 is moved in the direction A to position the tape cassette 2 in a limit position closest to the rotary cylinder 10 to thereby complete a cassette loading. In this state, a portion of the rotary cylinder 10 is received in the open space 2a of the tape cassette 2, as shown.

In conjunction with the above movement of the movable chassis 20, the tension pin 4, the guide rollers 5 and 8 and the slanted pin 9 which are positioned initially in an area corresponding to the open space 2a in the side of the supply reel 3 of the cassette 2 and the slanted pin 11, the guide roller 12, the slanted pin 13, the guide pin 15 and the pinch roller 16 which are positioned initially in an area corresponding to the open space 2a in the side of the take-up reel 18 of the cassette 2 are moved outwardly to derive the magnetic tape 1 from the cassette 2. Then the so-called tape loading operation is performed thereby to wind the tape helically on the rotary drum.

Fig. 1 shows the state of this mechanism after the tape loading completes in which the magnetic tape 1 is wound on the rotary cylinder 10 helically over a predetermined angle. In this state, a running path of the magnetic tape 1 in the tape supply side is defined by the guide roller 5, the slanted pin 6, the guide rollers 7 and 8 and the slanted pin 9 and that in the tape take-up side is defined by the slanted pin 11, the guide roller 12, the slanted pin 13 and the guide pin 15. The magnetic tape 1 is pinched between the capstan 14 and the pinch roller 16 both arranged between the slanted pin 13 and the fixed guide 15.

It should be noted that, in the state shown in Fig. 1, the tension pin 4, the guide rollers 5 and 7 and the slanted pin 6 are closer to the tape cassette 2 than the guide roller 8 and the slanted pin 9 and similarly the slanted pin 13, the capstan 14, the fixed guide 15 and the pinch roller 16 are closer to the cassette than the slanted pin 11 and the guide roller 12.

In recording or reproducing, the magnetic tape 1 is derived by rotation of the capstan 14 from the supply reel 3 and taken up by the take-up reel 18 during which a plurality of magnetic heads 17 mounted on the rotary cylinder 10 scan the magnetic tape 1. Tension of the magnetic tape 1 is detected by the tension pin 4 upon which a brake mechanism (not shown) associated with the supply reel 3 is controlled to maintain the tape tension constant.

In the construction mentioned above, the rotation center axis of the rotary drum 10 is in a plane S (referred to as "reference plane" hereinafter which includes a line X-X) orthogonal to a straight line connecting rotation centers of the supply reel 3 and the take-up reel 18 and inclined toward the tape cassette 2 as shown by an arrow B with respect to the main chasis 19 (i.e., the mounting plane of the tape cassette 2). Therefore, assuming, for simplicity of explanation, that an upper surface of the rotary cylinder 10 is flat, height of a point thereon decreases toward the tape cassette 2 with a point C thereon closest to the cassette 2 being smallest. Thus, when the portion of the rotary cylinder 10 is received in the open space 2a of the tape cassette 2, a lower surface of the internal flap and an upper surface of the rotary cylinder 10 are in substantially the same level in a direction vertical to the arrows A and A'.

Fig. 2 is a cross section taken along the line X-X (i.e., the reference plane S) in Fig. 1.

As shown in Fig. 2, the rotary cylinder 10 inclines toward the cassette 2 by an angle a with respect to a straight line in the reference plane S and normal to the main chasis 19. Further, in order to assure a smooth running of the tape while keeping the size of the device smallest, the portion of the rotary cylinder 10 received in the open space 2a of the tape cassette 2 is given minimum clearances C1 and C2 with respect to the internal flap 2b and an inner wall 2c of the open space 2a when the cassette 2 is mounted. As mentioned previously, since the upper surface of the rotary cylinder 10 is in substantially the same level as that of the internal flap 2b of the tape cassette 2 in a direction vertical to the arrow A (Fig. 1), the clearance C1 is also uniform in this vertical direction.

In the conventional technique mentioned previously, however, since the rotary cylinder 10 is inclined toward the side of the supply reel 3 with respect to the arrow B in Fig. 1 so that the lowest point C on the upper surface of the rotary cylinder 10 opposes to the supply reel 3, a portion of the upper surface of the rotary cylinder 10 on the side of the winding reel 13 becomes higher. Therefore, in order to receive such rotary cylinder 10 in the open space 2a of the cassette 2, the rotary cylinder 10 must be arranged in a lower position than the case shown in Fig. 2 if the same clearance C1 as that shown in Fig.2 is to be provided between the upper surface of the rotary cylinder 10 and the internal flap 2b.

Therefore, the thickness of the conventional structure becomes larger than that obtainable according to the present structure when the thickness of the cylinder drum and the inclination angle α are selected as the same as those in this embodiment. In other words, in the present embodiment, it is possible to arrange the rotary cylinder 10 in a higher level than the conventional structure with minimized thickness.

In the present embodiment in which the clearance C2 with respect to the inner wall 2c of the open space 2a of the tape cassette 2 is selected as minimum as shown in Fig. 2, the rotary cylinder 10 can be as close to the tape cassette 2 mounted as possible to thereby reduce the horizontal dimension L (Fig. 1) of the mechanism. Further, in Fig. 1, since the wrapping range of magnetic tape 1 on the rotary cylinder 10 is set symmetrically with respect to the reference plane S so that the tape guiding mechanism including the guide rollers 8 and 12 and the slanted guides 9 and 11 which are positioned in the vicinity of the rotary cylinder 10 when the tape loading completes does not take a position outside the rotary cylinder 10, the horizontal dimension L is further prevented from enlarged.

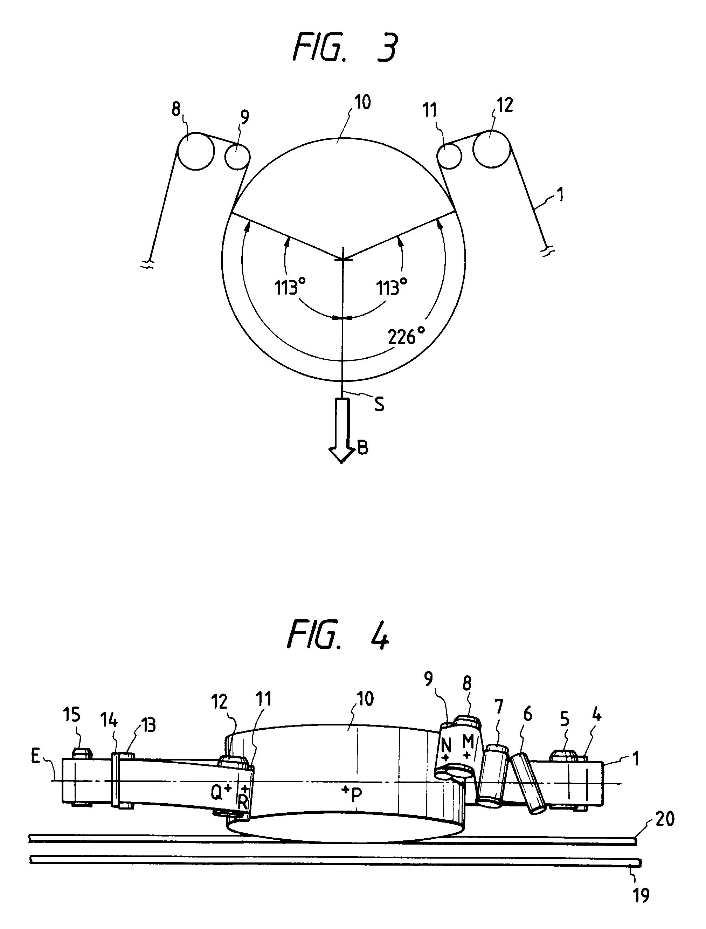

For a 8 mm video camera, for example, the wrapping range, i.e., wrapping angle of the magnetic tape 1 on the rotary cylinder 10 may be 226 degrees. In such case, the rotary cylinder 10 is wrapped with the magnetic tape 1 by 113 degrees on each side of the reference plane S as shown in Fig. 3.

Fig. 4 is a view of the mechanism looked in a direction shown by an arrow D in Fig. 1. In Fig. 4, corresponding portions to those in Fig. 1 are shown by same reference numerals, respectively.

In Fig. 4, a chain line E shows a center line (referred to as "tape reference center line" hereinafter) of the magnetic tape 1 within the tape cassette 2 (Fig. 1). In the state in which the tape loading is completed, the magnetic tape 1 is lifted up in the tape supply side of the rotary cylinder 10 with respect to the tape reference center line E by the slanted guides 6 and 9 and the guide rollers 7 and 8 and is lowered within the wrapping range on the rotary cylinder 10 such that the center line thereof is smoothly shifted from a level above the tape reference center line E to a level below the line E. In the tape leaving side of the rotary cylinder 10, the magnetic tape 1 is lifted up by the slanted pins 11 and 13 and the guide roller 12 such that its center line coincides with the tape reference line E.

Thus, in this embodiment in which the three-dimensional M loading system is employed, the positionings of those movable guide members are performed by a catcher to be described later after the loading completes. In this case, the guide roller 8 and the slanted guide 9 among those movable guide members, which protrude upwardly beyond others, are prevented from protruding upwardly beyond the rotary cylinder 10 and an external flap integral with the internal flap 2b of the tape cassette 2 (Fig. 2). Further, a position of a pressure contact mechanism (not shown) for determining positions of the slanted pin 11 and the guide roller 12 which protrude downwardly determines a lower end of the present mechanism. Therefore, the position of the pressure contact mechanism is set such that the magnetic tape 1 is wound on the rotary cylinder 10 at a predetermined inclination angle α (Fig. 2) with respect thereto. In order to make the present mechanism thinner, it is necessary to set the inclination angle α of the rotary cylinder 10 so that the level of the pressure contact mechanism for the slanted guide 11 and the guide roller 12 becomes as high as possible. In this embodiment, the inclination angle α is selected in a range from 6 degrees to 8 degrees.

Further, it should be appreciated in Fig. 4 that a level of a center point M of the magnetic tape 1 on the guide roller 8 is higher than a center point N of the tape 1 on the slanted guide roller 9 which is above the tape reference line E and a level of a center point Q of the tape 1 on the guide roller 12 which is lower than the tape reference line E is higher than a center R of the tape on the slanted guide 11. A capital P shows a rotation center point of the magnetic heads 17 which is slightly lower than the tape reference line E and slightly higher than the center Q.

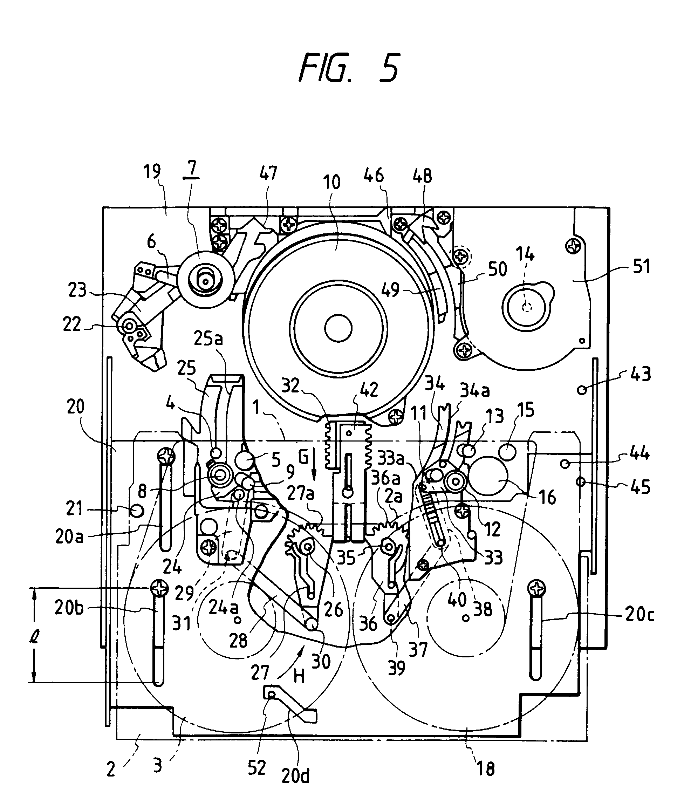

An operation timing of the movable chasis 20 and the various guide members from the cassette unloading to the cassette loading completion will be described in detail with reference to Figs. 5 to 8 in which corresponding portions to those shown in Figs. 1 to 4 are shown by same reference numerals, respectively.

In these figures, Fig. 5 is a plan view of the present mechanism in unloading state.

Refering to Fig. 5 as well as Figs. 9 and 10, a loading mechanism will be described in brief.

In the side of the supply reel 3, the roller 5 and the tension pin 4 are implanted on an arm (not shown) rotatably supported by a pin 21 implanted on the movable chasis 20. The roller 5 and the tension pin 4 are retracted in shown positions within the open space 2a of the tape cassette 2 in the unloading state. The guide roller 7 and the slanted pin 6 are implanted on an arm 23 rotatably supported by a pin 22 implanted on the main chasis 19 and held in their first positions shown in the unloading state. How to arrange these member will be described later with reference to a component arrangement on the main chasis 20.

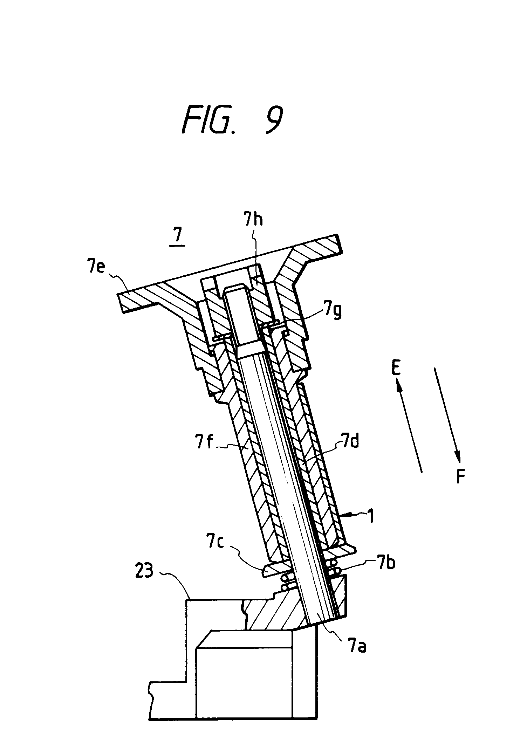

Now, a structure of the guide roller 7 will be described briefly with reference to Fig. 9. In Fig. 9, a shaft 7a is implanted on an arm 23 with a predetermined angle and orientation with respect thereto. A flange 7c for regulating a lower edge of the magnetic tape 1 is provided on the shaft 7a and a conical compression spring 7b is disposed on the shaft 7a between the flange 7c and the arm 23. A sleeve 7d is fitted on the shaft 7a and on the sleeve 7d a resin roller 7f is provided. A weight 7e is pressure-fitted on the resin sleeve 7f so that it can rotate together with the resin roller 7f around the sleeve 7d. In order to prevent the sleeve 7d and the roller 7f from being dropped out, a stopper 7h is screwed onto a thread end of the shaft 7a through a spacer 7g.

In this structure, the flange 7c and the sleeve 7d are biased by the compression spring 7b in a direction shown by an arrow E and movable in either direction E or F along the shaft 7a within a range defined by the position of the stopper 7h. Further, with movement of the flange 7c, the roller 7f and the weight 7e are movable along the shaft 7a. Thus, it is possible to limit the height of the lower edge of the magnetic tape 1 and to regulate the limit.

Returning to Fig. 5, a structure of the loading mechanism will be described briefly.

The guide roller 8 and the slanted pin 9 are implanted on a guide base 24 which is slidably mounted in a long slot 25a of a guide rail 25 screwed to the movable chasis 20. The guide rail 25 is linked through links 27, 28 and 29 rotatably supported by a pin 26 implanted on a rear side surface of the movable chasis 20 thereto. The link 28 is rotatably connected through a connecting rod 30 to the link 27 and the link 29 is rotatably connected through a connecting rod 31 to the link 28. The guide base 24 is rotatably supported by the link 29 through a pin 24a pressure fitted on the guide base 24. The link 27 has a geared portion 27a which can be meshed with a rack 32 provided slidably on the main chasis 19 in a direction shown by an arrow G in the same level as to that of the link 27.

In the take-up reel side area of the rotary cylinder 10, the slanted pin 11 and the guide roller 12 are implanted on a guide base 33 which is slidably mounted in a long slot 34a of a guide rail 34 screwed to the movable chasis 20. The guide rail 34 is linked through links 36, 37 and 38 rotatably supported by a pin 35 implanted on a rear side surface of the movable chasis 20 thereto. The link 37 is rotatably connected through a connecting rod 39 to the link 36 and the link 38 is rotatably connected through a connecting rod 40 to the link 37.

The guide base 33 is rotatably supported by the link 38 through a pin 33a pressure fitted on the guide base 33. A reference numeral 41 is a spring provided for the link 38 for positioning the guide base 33. Similarly to the link 27, the link 36 has a gear portion 36a which is able to mesh with a rack 42 provided slidably on the main chasis 19 in a direction shown by an arrow G in the same level as to that of the link 36. Further, the slanted pin 13 is implanted on an arm (not shown) rotatably supported by a pin 43 implanted on the main chasis 19.

The pinch roller 16 is implanted on an arm (not shown) rotatably supported by a pin 44 implanted on the movable chasis 20. The fixed guide 15 is also implanted on an arm (not shown) rotatably supported by a pin 43 implanted on the movable chasis 20. In the unloading state, these guides are received in the shown positions within the open space 2a of the tape cassette 2. A reference numeral 46 depicts a cylinder base for holding the rotary cylinder 10 in a predetermined position on the main chasis 19, 47 a positioning member for positioning the guide base 24 at the loading completion and 48 a positioning member for positioning the guide base 33 at the loading completion.

The positioning members 47 and 48 are secured by screws onto the cylinder base 46 similarly to the cylinder 10. Reference numerals 49 and 50 depict connecting members for connecting the guide rail 34 and the positioning member 46 and are secured by screws onto the main chasis 19. A reference numeral 51 depicts a capstan motor which is secured by screws in a predetermined position on the main chasis 19. The movable chasis 20 is connected through three long slots 20a, 20b and 20c thereof to the main chasis 19 movably with respect to the latter by a predetermined amount ℓ.

A slot 20d is a slide slot formed in the movable chasis 20 in which a movable chasis drive pin 52 is slidably received so that, when the drive pin 52 moves in a direction shown by an arrow H, the movable chasis 20 slides toward the rotary cylinder 10.

It should be noted that, in Fig. 5, a portion of the movable chasis 20 is removed to show the arrangement of the racks 32 and 42, links 27 and 36.

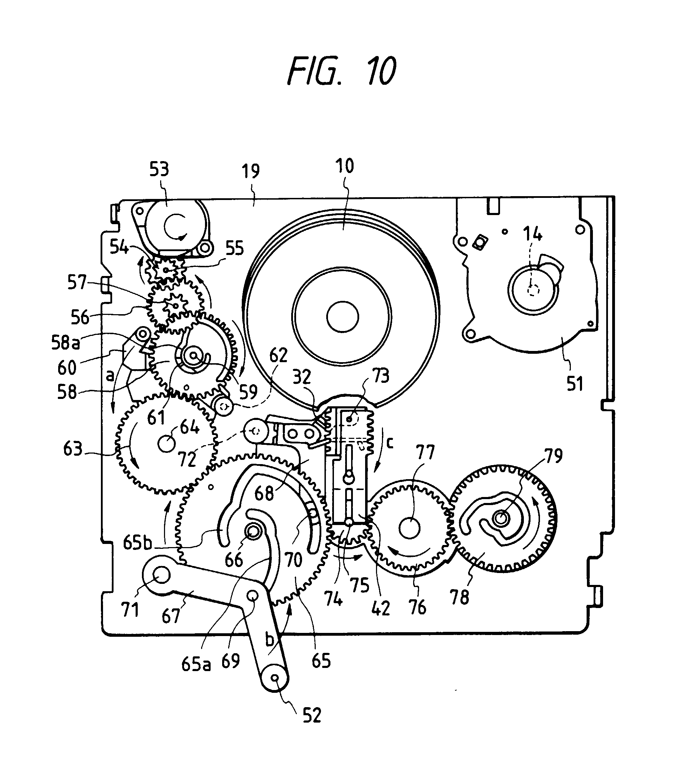

The structure of the loading mechanism arranged on the main chasis 19 will be described briefly with reference to Fig. 10.

It should be noted that Fig. 10 shows various members in unloading state. A reference numeral 53 depicts a loading motor secured by screws onto the main chasis 19, 54 a two-step gear rotatably supported by a pin 55, 56 a second two-step gear rotatably supported by a pin 57, 58 a cam gear rotatably supported by a pin 59, which has a cam slot 58a in which a pin 61 implanted on a cam arm 60 for rotating the arm 23 in Fig. 5 is engageably received. The cam arm 60 is rotatably supported by a pin 62 on the main chasis 19. A reference numeral 63 depicts a gear serving as a mechnism switching switch rotatably supported by a pin 64. A reference numeral 65 depicts a cam gear rotatably supported by a pin 66 for driving the movable chasis 20 and the racks 32 and 42. The cam gear 65 is formed with a cam slot 65a for driving the movable chasis 20 and a cam slot 65b for driving the racks 32 and 42. Pins 69 and 70 implanted on cam arms 67 and 68 are engaged with the cam slots 65a and 65b, respectively.

The cam arms 67 and 68 are rotatably supported by pins 71 and 72 on the main chasis 19, respectively. One end of the cam arm 68 is engaged with the rack 32 through a pin 73. A reference numeral 74 depicts an intermediate gear and 75 depicts a rotary shaft of the intermediate gear 74. The rotary shaft 75 also serves as a slide guide for the rack 42. A reference numeral 76 depicts a second intermediate gear and 77 depicts a rotary shaft of the intermediate gear 76. A reference numeral 78 depicts a cam gear for pressure-contact of the pinch roller 16 and 79 depicts a rotary shaft of the cam gear 78. When a loading instruction is supplied to the loading motor 53, the respective gears rotate in directions shown by the respective arrows to rotate the respective cam arms 66, 67 and 68 in directions shown by arrows a, b and c to thereby perform the loading operation.

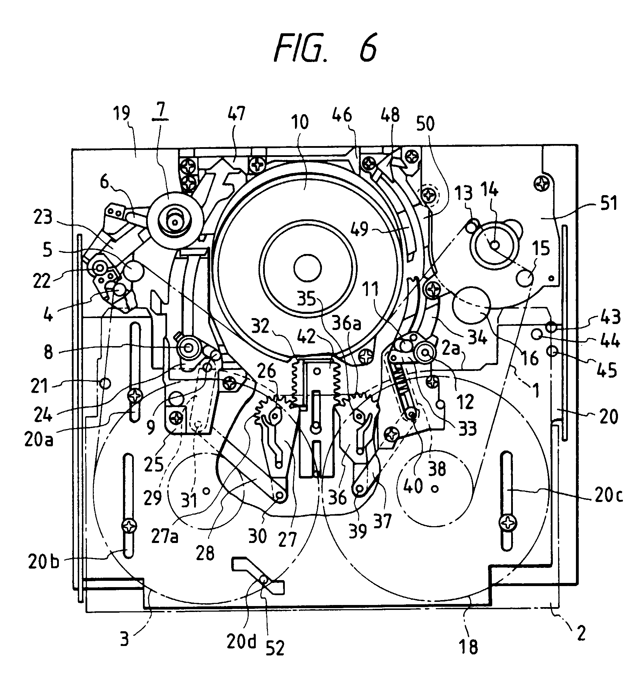

The operation timings of these guide members in the loading process will be described in detail with reference to Figs. 6 to 8.

Fig. 6 is a plan view showing the present embodiment on the way of the loading process. In Fig. 6, the movable chasis 20 is on the way of its slide at which the links 27 and 36 are meshed with the racks 32 and 42, respectively. In Fig. 6, the tension pin 4 and the guide roller 3 are derived from the open space 2a of the cassette 2 to the shown positions, immediately after the movable chasis 20 starts its slide motion, and then move together with the movable chasis 20. On the other hand, the slanted pin 13, the fixed guide 15 and the pinch roller 16 are derived gradually with the slide motion of the movable chasis 20 from the open space 2a of the tape cassette 2. In the state shown in Fig. 5 at which the links 27 and 36 are just meshed with the racks 32 and 42, the guide bases 24 and 33 are still in the same fixed positions in the open space 2a as those in the unloading completion and, therefore, move toward the rotary cylinder 10 by an amount corresponding to a slide amount of the movable chasis 20. For the arm 23, its position at the unloading completion (position shown in Fig. 5) is unchanged.

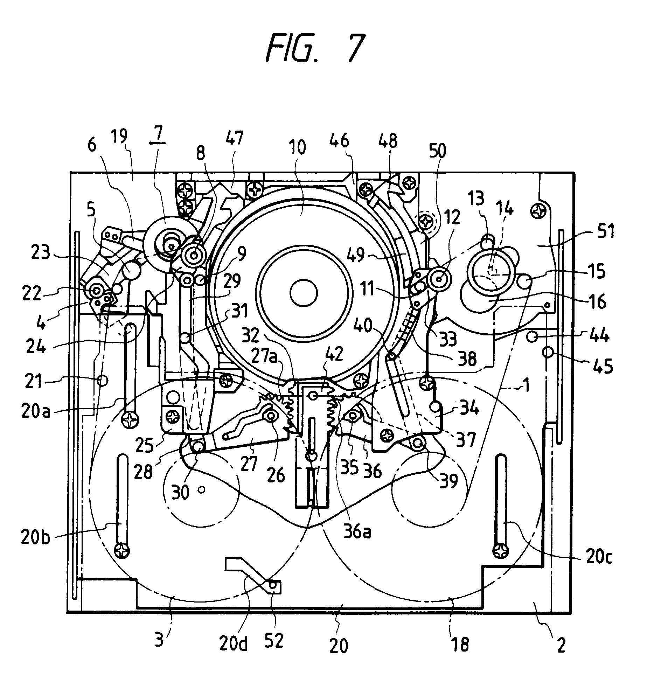

Fig. 7 shows a state of the members when the slide motion of the movable chasis 20 is completed with the links 27 and 36 being meshed with the racks 32 and 42. In Fig. 7, the tension pin 4, the guide re slanted pin 13, the fixed guide 15 and the pinch roller 16 are moved from the their positions shown in Fig. 6 toward positions attainable when the loading completes and the links 27 and 36 are meshed with the racks 32 and 42 to cause the links to rotate around the pins 26 and 35, respectively. Therefore, the guide bases 24 and 33 are moved to the positions shown along the guide slots 25a and 34a of the guide rails 25 and 34 while gradually rising and lowering, respectively. The position of the arm 23 shown in Fig. 6 is unchanged.

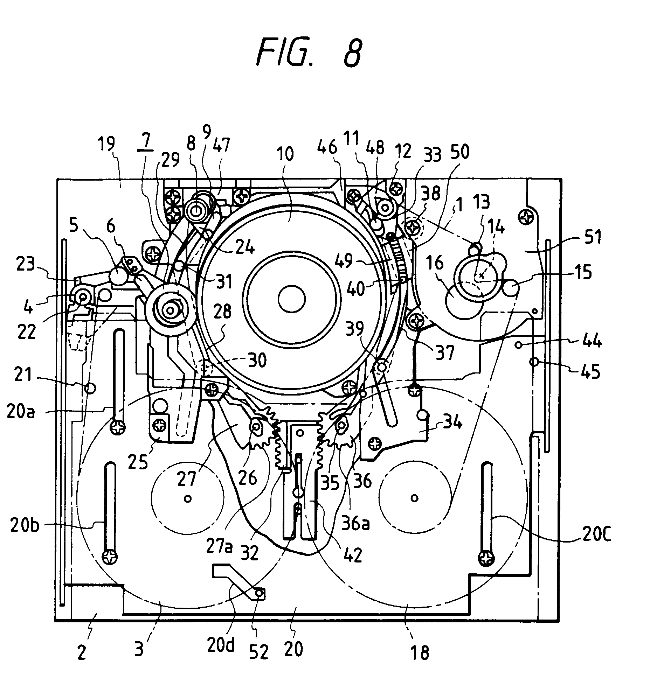

Fig. 8 shows the embodiment when the loading is completed. In Fig. 8, since the racks 32 and 42 are moved by predetermined amounts vertically on the drawing sheet, the links 27 and 36 meshing therewith are rotated clockwise and counterclockwise directions, respectively, to their final states shown in Fig. 8 at which the guide bases 24 and 33 are positioned by the positioning members 47 and 48, respectively. The racks 32 and 42 are driven by rotation of the cam arm 68 in a direction shown by an arrow c in Fig. 10. When the guide base 24 is further moved from the position shown in Fig. 7 with progress of loading, the arm 23 starts its movement with rotation of the cam arm 60 in a direction shown by an arrow a shown in Fig. 10 up to the final position shown in Fig. 8, completing the loading. Thus, a final tape passage is established.

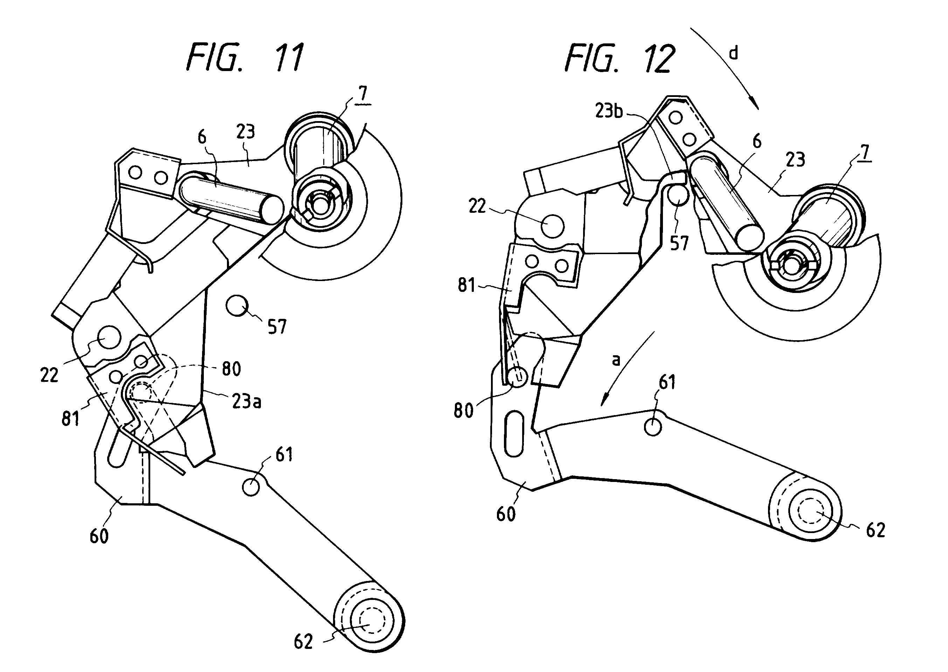

The operation of the arm 23 will be described in more detail with reference to Figs. 11 and 12.

Fig. 11 is a plan view showing the arm 23 and the cam arm 60 for driving the arm in the unloading state in enlarged scale. In Fig. 11, the arm 23 is arranged above the cam arm 60 and a pin 80 implanted on the cam arm 60 engages with a groove 23a formed in a lower surface of the arm 23. Further, a leaf spring 81 having contour shown is provided on the arm 23. In unloading condition, the pin 80 engages with the groove 23a at the shown position thereof so that the arm 23 is retracted substrantially from the position in loading completion state.

Fig. 12 is a plan view showing the arm 23 and the cam arm 60 in loading completion state in enlarged scale. In Fig. 12, upon rotation of the cam arm 60 in a direction shown by an arrow a, the arm 23 rotates in a direction shown by an arrow d in Fig. 12. Since the arm 23 has on its lower surface a retention face 23b for retaining arm rotation as shown, which contacts with a top end of the gear shaft 57 implanted on the main chasis 19, rotation of the arm 23 is restricted thereby. Further, with further rotation of the cam arm 60, the leaf spring 81 is deformed from the state shown by a dotted line to that shown by a solid line and a resultant reactive force produces a clock wise moment around the shaft 22. With this rotational moment, the retention face 23b of the arm 23 becomes in contact with the shaft 56 with a predetermined pressure. Thus, the position of the arm 23 at the completion of the loading operation is maintained highly precisely.

Therefore, in the present embodiment, the three-dimensional M loading in which a portion of the rotary cylinder 10 to which the tape is supplied is rised and a portion of the cylinder 10 from which the tape leaves is lowered can be realized with minimum space requirement, contributing to miniturization of the mechanism and hence the apparatus. Further, since, in the tape running system of this embodiment, the guide members are arranged such that the wrapping angle of the tape 1 on each of the slanted pins 6, 9, 11 and 13 becomes minimum, the increase of tension of the tape is minor and so it is possible to run the tape 1 stably. Further, since the timing of deriving tape by the guide roller 7 and the slanted pins 6 and 13 can be optimized, tape damage due to twisting of tape during cassette loading is minimized.

As described, according to the tape running system of the present invention, it is possible to increase a portion of the cylinder drum which is to be received in the open space of the tape cassette is maximized and it is also possible to minimize the space and thickness to be occupied by the tape running system. Thus, the magnetic recording and reproducing apparatus can be made very compact with minimum thickness, causing the portability of the apparatus to be substantially improved.

## Claims

1. A magnetic recording and reproducing apparatus including a cylinder drum (10) having a portion to be received in an open space (2a) of a magnetic tape cassette (2) including a magnetic tape supply reel (3) and a magnetic tape take-up reel (18) and loaded therein, said magnetic tape (1) derived from said tape cassette (2) being helically wound over a predetermined angle on said cylinder drum (10) and scanned by at least a magnetic head (17) mounted on said cylinder drum (10) upon rotation while running to record or reproduce information signal on said magnetic tape (1), said apparatus comprising:
a fixed chassis (19) for supporting said cylinder drum (10) with an inclination (α°) with respect thereto;
a movable chassis (20) movable with respect to said fixed chassis (19) for mounting said magnetic tape cassette (2) while receiving a portion of said cylinder drum (10) in said open space (2a) thereof;
first movable means (4, 5, 8, 9) provided on said movable chassis (20) in an area thereof corresponding to said open space (2a) of said tape cassette (2) in loaded state and movable between a first position in a cassette unloading state and a second position in a cassette loading completion state to derive a magnetic tape (1) from said tape supply reel (3) toward said cylinder drum (10) by a length long enough to smoothly shift a level of the tape upwardly toward said cylinder drum (10);
second movable means (11, 12, 13, 15, 16) provided on said movable chassis (20) in an area thereof corresponding to said open space (2a) of said tape cassette (2) in loaded state and movable between a first position in a cassette unloading state and a second position in a cassette loading completion state derive the magnetic tape from said take-up reel (18) toward said cylinder drum (10) by a length long enough to smoothly shift level of the tape (1) downwardly from said cylinder drum (10) to said take-up reel (18), said first and second movable means (4, 5, 8, 9; 11, 12, 13, 15, 16) being adapted to cooperate to wrap the tape (1) helically around said cylinder drum (10) over a predetermined angle;
third movable means (6, 7) adapted to cooperate with said first movable means (4, 5, 8, 9) to form a supply side tape running system for transporting said magnetic tape (1) from said supply reel (3) to said cylinder drum (10); and
third means (14) adapted to cooperate with said second movable means (11, 12, 13, 15, 16) to form a take-up side tape running system from said cylinder drum (10) to said take-up reel (18),
**characterized in that**
said third movable means includes a first slanted pin (6) and a first guide roller (7), positioned in an area in the vicinity of said cylinder drum (10) in the side of the tape supply reel (3) of said tape cassette (2) in their second positions and wherein said first movable means includes a second slanted pin (9), a second guide roller (8) and a first guide pin means (4, 5), said second slanted pin (9) and said second guide roller (8) and said first guide pin means (4, 5) being in contact with a base surface of said magnetic tape (1) in their second positions while said first slanted pin (6) and said first guide roller (7) being in contact with a magnetic surface of said magnetic tape (1) in their second positions, in such a way that a center line (E) of said magnetic tape (1) is smoothly shifted upwardly to a level higher than a rotation center of said cylinder drum (10) and a vector of said magnetic type (1) in a direction of said magnetic tape (1) coming from said tape supply reel (3) onto said second slanted pin (9) becomes in parallel to a vector in a direction parallel to an inclination of said first slanted pin (6) while running from said supply reel (3) through said first guide pin means (4, 5), said third movable means (6, 7), said second guide roller (8) and said second slanted pin (9) to said cylinder drum (10), said supply side tape running system being adapted to transport said magnetic tape (1) extending between said first slanted pin (6), said first guide roller (7) and said second guide roller (8) and said second slanted pin (9) with a loop convexed toward said tape cassette (2) in the loading completion state.

2. The magnetic recording and reproducing device claimed in claim 1, wherein said second movable means includes a third slanted pin (11), a third guide roller (12), a fourth slanted pin (13), and a third guide pin (15) positioned in an area in the vicinity of said cylinder drum (10) in the side of the tape take-up reel (18) of said tape cassette (2) in their second positions and wherein said third means includes a capstan (14) provided on said fixed chassis (19), said third slanted pin (11), said fourth slanted pin (13) and said third guide pin (15) being in contact with said magnetic surface of said magnetic tape in such a way that a center line (E) of said magnetic tape (1) is smoothly shifted downwardly to a level lower than said rotation center of said cylinder drum (10) and a vector of said magnetic tape (1) in a direction of said magnetic tape (1) coming from said cylinder drum (10) onto said capstan (14) becomes in parallel to a vector in a direction parallel to an inclination of said fourth slanted pin (13) while running from said cylinder drum (10) through said third slanted pin (11), said third guide roller (12) to said fourth slanted pin (13), said take-up side tape running system being adapted to transport said magnetic type (1) extending between said third slanted pin (11) and said take-up reel (18) with a loop concaved with respect to said tape cassette (2) in the loading completion state.

3. The apparatus claimed in claim 1 or 2, wherein said first slanted pin (6) and said first guide roller (7) are movable to their second positions in the loading completion state through a region substantially common to a moving path of said second slanted pin (9) and said second guide roller (8) during a loading process.

4. The apparatus claimed in claim 1 or 2, wherein said second slanted pin (9) and said second guide roller (8) are provided on an arm (24, 25, 26, 27, 28) rotatably supported on said movable chassis (20).

5. The apparatus claimed in claim 4, wherein said arm (27) is rotated and positioned by a cam gear (27a) rotatably supported on said movable chassis (20).

6. The apparatus claimed in any of claims 2 to 5, wherein said apparatus operates with a timing that said first guide pin means (4, 5) and said fourth slanted pin (13) are derived at the same time as said movable chassis (20) on which said tape cassette (2) is mounted starts its movement, that said second slanted pin (9), said second guide roller (8), said third slanted pin (11) and said third guide roller (12) start to move immediately before said movable chassis (20) completes its movement, that said second slanted pin (9), said second guide roller (8), said third slanted pin (11) and said third guide roller (12) move up to the loading completion positions after said movable chassis (20) stops and that said first slanted pin (6) and said first guide roller (7) move from their first positions to their second positions after said second slanted pin (9) and said second guide roller (8) pass through said common region.

## Patentansprüche

1. Magnetisches Aufzeichnungs- und Wiedergabegerät, das eine Zylindertrommel (10) enthält, die ein in einem offenen Raum (2a) einer Magnetbandkassette (2) aufzunehmenden Teil aufweist, wobei die Kassette eine Magnetband-Abwickelspule (3) und eine Magnetband-Aufwickelspule (18) darin geladen enthält, wobei das aus der Magnetbandkassette (2) abgelenkte Magnetband (1) spiralig über einen vorbestimmten Winkel auf der Zylindertrommel (10) gewunden und durch mindestens einen Magnetkopf (17), der auf der Zylindertrommel (10) montiert ist, beim Drehen abgetastet wird, während sie zum Aufzeichnen oder Wiedergeben eines Informationssignals auf dem Magnetband (1) läuft, wobei das Gerät aufweist:
ein feststehendes Chassis (19) zum Haltern der Zylindertrommel (10) mit einer Neigung (α°) relativ dazu;
ein bewegliches Chassis (20), das in bezug auf das feststehende Chassis (19) beweglich ist, zum Montieren der Magnetbandkassette (2) bei gleichzeitigem Aufnehmen eines Teils der Zylindertrommel (10) in dem genannten offenen Raum (2a) der Kassette;
erste bewegliche Einrichtungen (4, 5, 8, 9), die auf dem beweglichen Chassis (20) in einem Bereich desselben vorgesehen sind, der dem offenen Raum (2a) der Bandkassette (2) im geladenen Zustand entspricht, und wobei das Chassis zwischen einer ersten Position in einem Kassettenentladezustand und einer zweiten Position in einem Kassettenlade-Beendigungszustand beweglich ist, um das Magnetband (1) von der Bandabwickelspule (3) zur Zylindertrommel (10) um eine Länge abzulenken, die lang genug ist, um das Niveau des Bandes allmählich aufwärts in Richtung auf die Zylindertrommel (10) zu verschieben;
zweite bewegliche Einrichtungen (11, 12, 13, 15, 16), die auf dem beweglichen Chassis (20) in einem Bereich desselben vorgesehen sind, der dem offenen Raum (2a) der Bandkassette (2) im Ladezustand entspricht, wobei das Chassis beweglich zwischen einer ersten Position im Kassettenentladezustand und einer zweiten Position im Kassettenlade-Beendigungszustand beweglich ist, zum Ablenken des Magnetbandes von der Aufwickelspule (18) zur Zylindertrommel (10) um eine Länge, die lang genug ist, um das Niveau des Bandes (1) gleichmäßig nach unten hin von der Zylindertrommel (10) zur Aufwickelspule (18) zu verschieben, wobei die ersten und zweiten beweglichen Einrichtungen (4, 5, 8, 9; 11, 12, 13, 15, 16) zum Zusammenwirken so angepaßt sind, daß das Band (1) spiralig um die Zylindertrommel (10) über einen vorbestimmten Winkel gewickelt wird;
eine dritte bewegliche Einrichtung (6, 7), die angepaßt ist, um mit den ersten beweglichen Einrichtungen (4, 5, 8, 9) zusammenzuwirken, um ein abwicklungsseitiges Bandlaufsystem zum Transportieren des Magnetbandes (1) von der Abwickelspule (3) zur Zylindertrommel (10) zu bilden; und
eine dritte Einrichtung (14), die angepaßt ist, um mit den zweiten beweglichen Einrichtungen (11, 12, 13, 15, 16) zusammenzuwirken, um ein aufwicklungsseitiges Bandlaufsystem von der Zylindertrommel (10) zur Aufwickelspule (18) zu bilden,
**dadurch gekennzeichnet**, daß
die dritte bewegliche Einrichtung einen ersten schräggestellten Stift (6) und eine erste Führungsrolle (7) umfaßt, die in einem Bereich in der Nähe der Zylindertrommel (10) auf Seiten der Bandabwickelspule (3) der Bandkassette (2) in ihren zweiten Positionen positioniert sind, und wobei die ersten beweglichen Einrichtungen einen zweiten schräggstellten Stift (9), eine zweite Führungsrolle (8) und eine erste Führungsstifteinrichtung (4, 5) umfassen, wobei der zweite schräggestellte Stift (9) und die zweite Führungsrolle (8) sowie die erste Führungsstifteinrichtung (4, 5) in Kontakt mit einer Basisoberfläche des Magnetbandes (1) in ihren zweiten Positionen stehen, während der erste schräggestellte Stift (6) und die erste Führungsrolle (7) in Kontakt mit der magnetischen Oberfläche des Magnetbandes (1) in ihren zweiten Positionen stehen, derart, daß die Mittellinie (E) des Magnetbandes (1) allmählich aufwärts auf ein Niveau verschoben wird, das höher als die Rotationsachse der Zylindertrommel (10) liegt, und ein Richtungsvektor des Magnetbandes (1), das von der Magnetabwickelspule (3) zum zweiten schräggestellten Stift (9) kommt, in Parallellage zu einem Vektor in einer Richtung parallel zur Neigung des ersten schräggestellten Stiftes (6) beim Laufen von der Abwickelspule (3) durch die ersten Führungsstifteinrichtungen (4, 5), die dritten beweglichen Einrichtungen (6, 7), die zweite Führungsrolle (8) und den zweiten schräggestellten Stift (9) zur Zylindertrommel (10) gelangt, wobei das abwicklungsseitige Bandlaufsystem angepaßt ist, um das Magnetband (1), das sich zwischen dem ersten schräggestellten Stift (6), der ersten Führungsrolle (7) und der zweiten Führungsrolle (8) sowie dem zweiten schräggestellten Stift (9) mit einer Schleife zu transportieren, die zur Bandkassette (2) im Ladebeendigungszustand hin konvex verläuft.

2. Magnetisches Aufzeichnungs- und Wiedergabegerät nach Anspruch 1, bei dem die zweiten beweglichen Einrichtungen einen dritten schräggestellten Stift (11), eine dritte Führungsrolle (12), einen vierten schräggestellten Stift (13) und einen dritten Führungsstift (15) umfassen, die in einem Bereich in der Nähe der Zylindertrommel (10) auf Seiten der Bandaufwickelspule (18) der Bandkassette (2) in ihren zweiten Positionen positioniert sind, und wobei die dritte Einrichtung einen Capstan (14) umfaßt, der auf dem feststehenden Chassis (19) vorgesehen ist, wobei der dritte schräggestellte Stift (11), der vierte schräggestellte Stift (13) und der dritte Führungsstift (15) in Kontakt mit der magnetischen Oberfläche des Magnetbandes in der Weise stehen, daß die Mittellinie (E) des Magnetbandes (1) allmählich abwärts auf ein Niveau verschoben wird, das niedriger als die Rotationsachse der Zylindertrommel (10) liegt, und daß der Vektor des Magnetbandes (1) in der Richtung des Magnetbandes (1) von der Zylindertrommel (10) kommend zu einem Vektor in Richtung parallel zur Neigung des vierten schräggestellten Stiftes (13), beim Lauf von der Zylindertrommel (10) durch den dritten schräggestellten Stift (11), die dritte Führungsrolle (12) zum vierten schräggestellten Stift (13) gelangt, wobei das aufwicklungsseitige Bandlaufsystem angepaßt ist, um das Magnetband (1) zu transportieren, das sich zwischen dem dritten schräggestellten Stift (11) und der Aufwickelspule (18) mit einer Schleife erstreckt, die im Entlade-Beendigungszustand konkav in bezug auf die Bandkassette (2) verläuft.

3. Gerät nach Anspruch 1 oder 2, bei dem der erste schräggestellte Stift (6) und die erste Führungsrolle (7) hin zu ihren zweiten Positionen im Lade-Beendigungszustand durch einen Bereich beweglich sind, der im wesentlichen dem Bewegungspfad des zweiten schräggestellten Stiftes (9) und der zweiten Führungsrolle (8) während des Ladeprozesses gemeinsam ist.

4. Gerät nach Anspruch 1 oder 2, bei dem der zweite schräggestellte Stift (9) und die zweite Führungsrolle (8) auf einem Arm (24, 25, 26, 27, 28) angebracht sind, der drehbar auf dem beweglichen Chassis (20) gehaltert ist.

5. Gerät nach Anspruch 4, bei dem der Arm (27) durch ein Kurvengetrieberad (27a) in Drehung versetzt und positioniert wird, das drehbar auf dem beweglichen Chassis (20) gehaltert ist.

6. Gerät nach irgendeinem der Ansprüche 2 bis 5, bei dem das Gerät mit einer Zeitgabe arbeitet, bei der die erste Führungsstifteinrichtung (4, 5) und der vierte schräggestellte Stift (13) zur gleichen Zeit abgelenkt werden, in der das bewegliche Chassis (20), auf dem die Bandkassette (2) montiert ist, ihre Bewegung beginnt; wobei der zweite schräggestellte Stift (9), die zweite Führungsrolle (8) und der dritte schräggestellte Stift (11) sowie die dritte Führungsrolle (12) beginnen sich zu bewegen, unmittelbar bevor das bewegliche Chassis (20) seine Bewegung beendet; wobei der zweite schräggestellte Stift (9), die zweite Führungsrolle (8) und der dritte schräggestellte Stift (11) sowie die dritte Führungsrolle (12) sich aufwärts in die Lade-Beendigungspositionen bewegen, nachdem das bewegliche Chassis (20) zum Stillstand gekommen ist; und wobei der erste schräggestellte Stift (6) und die erste Führungsrolle (7) sich von ihren ersten Positionen zu ihren zweiten Positionen bewegen, nachdem der zweite schräggestellte Stift (9) und die zweite Führungsrolle (8) durch den genannten gemeinsamen Bereich hindurchtreten.

## Revendications

1. Dispositif d'enregistrement et de reproduction magnétique comprenant un tambour cylindrique (10) possédant une partie destinée à être logée dans un espace ouvert (2a) d'une cassette à bande magnétique (2) comprenant une bobine (3) débitrice de bande magnétique et une bobine (18) réceptrice de bande magnétique, et chargée dans cet espace, ladite bande magnétique (1) tirée de ladite cassette à bande (2) étant enroulée en hélice sur un angle prédéterminé sur ledit tambour cylindrique (10) et étant explorée par balayage par au moins une tête magnétique (17) montée sur ledit tambour cylindrique (10) pour tourner lors du fonctionnement pour enregistrer ou reproduire un signal d'information sur ladite bande magnétique (1), ledit dispositif comprenant :
un châssis fixe (19) servant à supporter ledit tambour cylindrique (10) avec une inclinaison (α°) par rapport au châssis ;
un châssis mobile (20) déplaçable par rapport audit châssis fixe (19) et servant au montage de ladite cassette à bande magnétique (2) alors qu'elle reçoit, dans ledit espace ouvert (2a), une partie dudit tambour cylindrique (10) ;
des premiers moyens mobiles (4, 5, 8, 9) prévus sur ledit châssis mobile (20) dans une zone de ce dernier correspondant audit espace ouvert (2a) de ladite cassette à bande (2) à l'état chargé, et déplaçables entre une première position dans un état de déchargement de la cassette et une seconde position dans un état d'achèvement de chargement de la cassette pour tirer une bande magnétique (1) de ladite bobine (3) débitrice de la bande en direction dudit tambour cylindrique (10) sur une longueur suffisamment grande pour décaler en douceur un niveau de la bande vers le haut en direction dudit tambour cylindrique (10) ;
des seconds moyens mobiles (11, 12, 13, 15, 16) prévus sur ledit châssis mobile (20) dans une zone de ce dernier correspondant audit espace ouvert (2a) de ladite cassette à bande (2) à l'état chargé, et déplaçables entre une première position dans un état de déchargement de la cassette et une seconde position dans un état d'achèvement de chargement de la cassette, pour tirer la bande magnétique de ladite bobine réceptrice (18) en direction dudit tambour cylindrique (10) sur une longueur suffisamment grande pour décaler en douceur le niveau de la bande (1) vers le bas depuis ledit tambour cylindrique (10) en direction de ladite bobine réceptrice (18), lesdits premiers et seconds moyens mobiles (4, 5, 8, 9 ; 11, 12, 13, 15, 16) étant adaptés pour coopérer de manière à enrouler en hélice la bande (1) autour dudit tambour cylindrique (10) sur un angle prédéterminé;
des troisièmes moyens mobiles (6, 7) aptes à coopérer avec lesdits premiers moyens mobiles (4, 5, 8, 9) pour former un système de défilement de la bande côté alimentation pour transporter ladite bande magnétique (1) de ladite bobine débitrice (3) audit tambour cylindrique (10) ; et
des troisièmes moyens (14) aptes à coopérer avec lesdits seconds moyens mobiles (11, 12, 13, 15, 16) pour former un système de circulation de la bande côté enroulement depuis ledit tambour cylindrique (10) en direction de ladite bobine réceptrice (18),
caractérisé en ce que
lesdits troisièmes moyens mobiles comprennent une première tige inclinée (6) et un premier rouleau de guidage (7), positionnés dans une zone située au voisinage dudit tambour cylindrique (10) du côté de la bobine (3) débitrice de la bande de ladite cassette à bande (2) dans leurs secondes positions, et lesdits premiers moyens mobiles comprenant une seconde tige inclinée (9), un second rouleau de guidage (8) et des premiers moyens formant broches de guidage (4, 5), ladite seconde tige inclinée (9) et ledit second rouleau de guidage (8) et lesdits premiers moyens formant broches de guidage (4, 5) étant en contact avec une surface de base de ladite bande magnétique (1), dans leurs secondes positions, tandis que ladite première tige inclinée (6) et ledit premier rouleau de guidage (7) sont en contact avec une surface magnétique de ladite bande magnétique (1) dans leurs secondes positions, de telle sorte qu'une ligne centrale (E) de ladite bande magnétique (1) est décalée en douceur vers le haut à un niveau plus élevé qu'un centre de rotation dudit tambour cylindrique (10), et qu'un vecteur de ladite bande magnétique (1) dans une direction de ladite bande magnétique (1) s'étendant de ladite bobine (3) débitrice de la bande en direction de ladite seconde tige inclinée (9) devient parallèle à un vecteur dans une direction parallèle à une inclinaison de ladite tige inclinée (6), lors du déplacement depuis ladite bobine débitrice (3) jusqu'audit tambour cylindrique (10) en passant par lesdits premiers moyens formant broches de guidage (4, 5), lesdits troisièmes moyens mobiles (6, 7), ledit second rouleau de guidage (8) et ladite seconde tige inclinée (9), ledit système de déplacement de la bande côté alimentation étant adapté pour transporter ladite bande magnétique (1) qui s'étend entre ladite première tige inclinée (6), ledit premier rouleau de guidage (7) et ledit second rouleau de guidage (8) et ladite seconde tige inclinée (9), en formant une boucle tournant sa convexité vers ladite cassette à bande (2) dans l'état d'exécution du chargement.

2. Dispositif d'enregistrement et de reproduction magnétique selon la revendication 1, dans lequel lesdits seconds moyens mobiles comprennent une troisième tige inclinée (11), un troisième rouleau de guidage (12), une quatrième tige inclinée (13) et une troisième broche de guidage (15) positionnés dans une zone située au voisinage dudit tambour cylindrique (10) du côté de la bobine (18) réceptrice de la bande de ladite cassette à bande (2), dans leurs secondes positions, dans lequel lesdits troisièmes moyens comprennent un cabestan (14) prévu sur ledit châssis fixe (19), ladite troisième tige inclinée (11), ladite seconde tige inclinée (13) et ladite troisième broche de guidage (15) étant en contact avec ladite surface magnétique de ladite bande magnétique de telle sorte qu'une ligne centrale (E) de ladite bande magnétique (1) est légèrement décalée vers le bas à un niveau plus bas que ledit centre de rotation dudit tambour cylindrique (10), et qu'un vecteur de ladite bande magnétique (1) dans une direction de ladite bande magnétique (1) s'étendant depuis ledit tambour cylindrique (10) en direction dudit cabestan (14) devient parallèle à un vecteur dans une direction parallèle à une inclinaison de ladite quatrième tige inclinée (13), au cours du déplacement depuis ledit tambour cylindrique (10) jusqu'à ladite quatrième tige inclinée (13) en passant par ladite troisième tige inclinée (11) et ledit troisième rouleau de guidage (12), ledit système de déplacement de la bande côté réception étant adapté pour transporter ladite bande magnétique (1) s'étendant entre ladite troisième tige inclinée (11) et ladite bobine de réception (18), avec une boucle tournant sa concavité vers ladite cassette à bande (2) dans l'état d'exécution du chargement.

3. Dispositif selon la revendication 1 ou 2, dans lequel ladite première tige inclinée (6) et ledit premier rouleau de guidage (7) peuvent être ramenés dans leur secondes positions dans l'état d'exécution du chargement en passant dans une région sensiblement commune à un trajet de déplacement de ladite seconde tige inclinée (9) et dudit second rouleau de guidage (8) pendant un processus de chargement.

4. Dispositif selon la revendication 1 ou 2, dans lequel ladite seconde tige inclinée (9) et ledit second rouleau de guidage (8) sont prévus sur un bras (24, 25, 26, 27, 28) supporté de manière à pouvoir tourner sur ledit châssis mobile (20).

5. Dispositif selon la revendication 4, dans lequel un pignon à came (27a) supporté de manière à pouvoir tourner sur ledit châssis mobile (20) fait tourner et positionne ledit bras (27).

6. Dispositif selon l'une quelconque des revendications 2 à 5, dans lequel ledit dispositif fonctionne avec un cadencement tel que lesdits premiers moyens formant broches de guidage (4, 5) et ladite quatrième tige inclinée (13) sont déplacés au même moment où ledit châssis mobile (20), sur lequel ladite cassette à bande (2) est montée, commence à se déplacer, que ladite seconde tige inclinée (9), ledit second rouleau de guidage (8), ladite troisième tige inclinée (11) et ledit troisième rouleau de guidage (12) commencent à se déplacer juste avant que ledit châssis mobile (20) achève son déplacement, que ladite seconde tige inclinée (9), ledit second rouleau de guidage (8), ladite troisième tige inclinée (11) et ledit troisième rouleau de guidage (12) se soulèvent jusque dans des positions d'exécution du chargement après que ledit châssis mobile (20) s'est arrêté, et que ladite première tige inclinée (6) et ledit premier rouleau de guidage (7) se déplacent de leurs premières positions vers leurs secondes positions après que ladite seconde tige inclinée (9) et ledit second rouleau de guidage (8) ont franchi ladite région commune.
